(19) Europäisches Patentamt / European Patent Office / Office européen des brevets

(11) **EP 3 217 502 B1**

(12) **EUROPEAN PATENT SPECIFICATION**

(45) Date of publication and mention
of the grant of the patent:
**01.09.2021  Bulletin 2021/35**

(51) Int Cl.:
*H02H 9/04* *(2006.01)*      *H02H 7/00* *(2006.01)*

(21) Application number: **17305258.0**

(22) Date of filing: **10.03.2017**

(54) **APPARATUS AND METHOD FOR SURGE PROTECTION DEVICE**

VORRICHTUNG UND VERFAHREN FÜR EINE ÜBERSPANNUNGSSCHUTZVORRICHTUNG

APPAREIL ET PROCÉDÉ POUR DISPOSITIF DE PROTECTION CONTRE LES SURTENSIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.03.2016  CN 201610136160
09.08.2016  CN 201610645273**

(43) Date of publication of application:
**13.09.2017  Bulletin 2017/37**

(73) Proprietor: **Schneider Electric Industries SAS
92500 Rueil-Malmaison (FR)**

(72) Inventors:
• **TIAN, Simon
38320 Eybens (FR)**
• **MA, Feng
Shanghai 201203 (CN)**

(74) Representative: **Manitz Finsterwald
Patent- und Rechtsanwaltspartnerschaft mbB
Martin-Greif-Strasse 1
80336 München (DE)**

(56) References cited:
**WO-A1-2016/054719      US-A1- 2007 188 962
US-A1- 2012 224 291**

## Description

### TECHNICAL FIELD OF THE DISCLOSURE

The present disclosure relates to the field of electronic detection, and more particularly, to an apparatus and method for surge protection device.

### BACKGROUND

Currently, Surge Protection Device (SPD) has been widely used in areas such as lightning current protection or the like. However, due to a structure limitation to the existing surge protection device, a user cannot know the detailed working status of the surge protection device. Thus, the user may be confused about whether the surge protection device working well.

On the other hand, the surge protection device deteriorates over time. Although the surge protection device has not been completely damaged, its performance may not be able to satisfy the requirement for safe work. However, similarly, due to the structure limitation to the surge protection device, the user cannot know the degree of deterioration of the surge protection device, which may cause severe security risk.

US 2007/0188962 A1 discloses a surge protection life cycle monitor system and method. The system and method monitors preferably each surge that an electric surge protection component experiences. Each surge is measured to determine magnitude and duration, and a cumulative surge measurement history is maintained.

### SUMMARY

In view of the above situation, the present disclosure provides an apparatus and a method for a surge protection device, which can effectively indicate working status of the surge protection device, therefore, user experience may be improved and the security of the surge protection device and the application scenarios thereof may be improved as well.

More in detail, the object of the invention is to provide for a method and an apparatus for a surge protection device an improved timing determination of surge currents.

This object is accomplished by the features of the independent claims.

An apparatus for a surge protection device comprises a converting circuit, configured to convert an input surge current into a voltage signal which is proportional to the surge current, a peak obtaining circuit, configured to obtain a peak voltage of the voltage signal, a duration determining circuit, configured to determine a duration of the surge current based on the voltage signal, a peak current determining circuit, configured to determine a peak surge current corresponding to the peak voltage based on a predetermined relationship between the peak voltage and the peak surge current, a lifetime parameter determining circuit, configured to determine a lifetime-related parameter of the surge protection device from the peak surge current and the duration, according to a lifetime curve of the surge protection device, and an output circuit, configured to output the parameter. The lifetime parameter determining circuit is adapted to determine the lifetime-related parameter to comprise at least one of remaining lifetime and degree of cumulative deterioration. The duration determining circuit comprises an energy obtaining circuit, configured to obtain an energy of the voltage signal, and a calculating circuit, configured to calculate the duration of the surge current based on the peak voltage and the energy.

A method for a surge protection device comprises converting an input surge current into a voltage signal which is proportional to the surge current, obtaining a peak voltage of the voltage signal, determining a duration of the surge current based on the voltage signal, determining a peak surge current corresponding to the peak voltage based on a predetermined relationship between the peak voltage and the peak surge current, determining a lifetime-related parameter of the surge protection device from the peak surge current and the duration, according to a lifetime curve of the surge protection device, and outputting the parameter. The lifetime-related parameter is determined to indicate at least one of remaining lifetime and degree of cumulative deterioration of the surge protection device. The step of determining the duration of the surge current comprises obtaining an energy of the voltage signal, and calculating the duration of the surge current based on the peak voltage and the energy.

In the apparatus and method for the surge protection device according to embodiments of the present disclosure, surge current duration of the surge current is determined more reliable, thus, working status of the surge protection device can be effectively indicated, and accordingly, user experience may be improved, and the security of the surge protection device and the application scenarios thereof may be improved as well.

### BRIEF DESCRIPTION OF THE DRAWINGS

[0011]

　FIG. 1A and FIG. 1B are diagrams illustrating scenarios to which an apparatus for a surge protection device is applied according to an embodiment of the present disclosure;

　FIG. 2 is a block diagram exemplarily illustrating a main configuration of an apparatus for a surge protection device according to an embodiment of the present disclosure;

　FIG. 3 is a structure diagram exemplarily illustrating a hardware configuration of an apparatus for a surge protection device according to a first embodiment of the present disclosure;

FIG. 4 is a structure diagram exemplarily illustrating a hardware configuration of an apparatus for a surge protection device according to a second embodiment of the present disclosure;

FIG. 5 is a circuit diagram exemplarily illustrating an exemplary implementation of an energy obtaining circuit of an apparatus for a surge protection device according to an embodiment of the present disclosure;

FIG. 6 is a waveform diagram exemplarily illustrating relationships among an actual surge current signal, an output signal of a transformer circuit, an output signal of an integrating circuit (i.e., a voltage signal described with reference to FIG. 2) and an approximating signal of the voltage signal;

FIG. 7 is a diagram exemplarily illustrating a lifetime curve of a surge protection device; and

FIG. 8 is a flowchart illustrating main steps of a method for a surge protection device according to an embodiment of the present disclosure.

DETAILED DESCRIPTION

Hereinafter, embodiments of the present disclosure will be described in detail with reference to the accompany drawings.

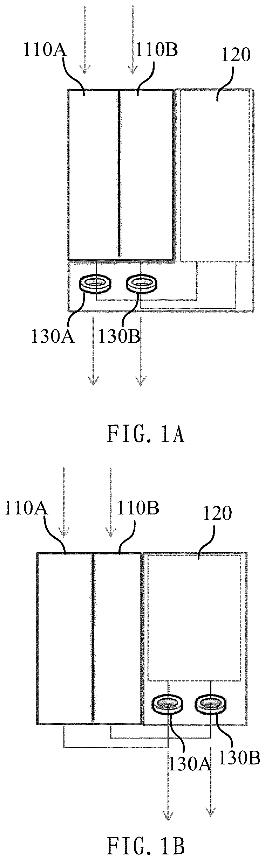

FIG. 1A and FIG. 1B are diagrams illustrating scenarios to which an apparatus for a surge protection device is applied according to an embodiment of the present disclosure.

Particularly, FIG. 1A and FIG. 1B illustrate two layouts of the apparatus for the surge protection device according to an embodiment of the present disclosure, respectively. In FIG. 1A, an electronic unit 120 and transformer circuits 130A and 130B constitute the apparatus for the surge protection device according to the embodiment of the present disclosure. The apparatus is arranged together with the existing surge protection devices 110A and 110B in a semi-circumferential manner (i.e., an inverse-L-shaped manner). The surge protection device 110A is connected to the electronic device 120 via the transformer circuit 130A, and the surge protection device 110B is connected to the electronic device 120 via the transformer circuit 130B.

Similarly, in FIG.1B, the electronic unit 120, and the transformer circuits 130A and 130B constitute the apparatus for the surge protection device according to the embodiment of the present disclosure. The surge protection device 110A is connected to the electronic device 120 via the transformer circuit 130A, and the surge protection device 110B is connected to the electronic device 120 via the transformer circuit 130B. Different from that in FIG. 1A, the apparatus in FIG.1B is arranged side by side with the existing surge protection devices 110A and 110B.

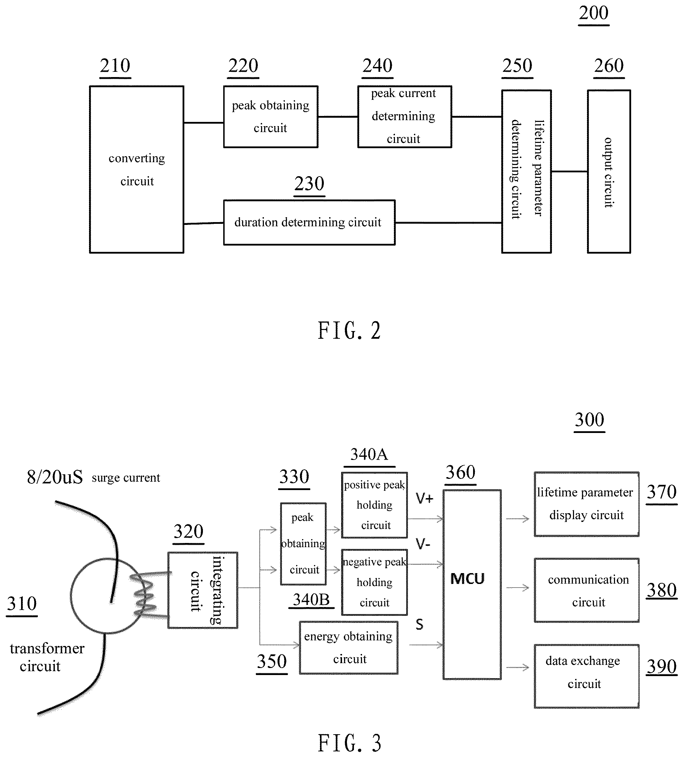

According to FIG. 1A and FIG. 1B, the combination of the existing surge protection device and the apparatus for the surge protection device according to an embodiment of the present disclosure described in detail with reference to FIG. 2 to FIG. 7 can be considered as the surge protection device according to an embodiment of the present disclosure.

It should be noted that FIG. 1A and FIG. 1B illustrate merely two exemplary layouts of a surge protection device according to an embodiment of the present disclosure. Those skilled in the art may be able to devise various other layouts on this basis.

In addition, it should be noted that FIG.1A and FIG. 1B exemplarily illustrate two-level surge protection devices, however, more or less surge protection devices can be cascaded depending on design requirement.

Hereinafter, an apparatus for a surge protection device according to an embodiment of the present disclosure will be described with reference to FIG. 2. The apparatus for the surge protection device according to the embodiment of the present disclosure may be used for providing an indication of a parameter related to a lifetime of the surge protection device, therefore the apparatus for the surge protection device according to the embodiment of the present disclosure may be implemented as an indicating apparatus or a monitoring apparatus for the surge protection device.

As shown in FIG. 2, the apparatus 200 includes a converting circuit 210, a peak obtaining circuit 220, a duration determining circuit 230, a peak current determining circuit 240, a lifetime parameter determining circuit 250, and an output circuit 260.

Particularly, the converting circuit 210 converts an input surge current into a voltage signal which is proportional to the surge current. Exemplarily, the converting circuit 210 includes a transformer circuit and an integrating circuit. The transformer circuit may be implemented by a device such as Rogowski Coil etc., and may be used for converting the surge current into a differential signal. The integrating circuit integrates the differential signal to obtain the voltage signal. The voltage signal is directly proportional to the surge current. Of course, those skilled in the art should understand that the implementation of the converting circuit 210 described above is merely an example. The apparatus according to embodiments of the present disclosure is not limited thereto, as long as the input surge current can be converted into the voltage signal proportional to the surge current.

The peak obtaining circuit 220 obtains a peak voltage of the voltage signal. Exemplarily, the peak obtaining circuit 220 may include an obtaining circuit and a holding circuit. The obtaining circuit obtains the peak voltage of the voltage signal. The holding circuit holds the peak voltage. Optionally, the holding circuit may include at least one of a positive peak holding circuit and a negative peak holding circuit. The positive peak holding circuit is used for holding a positive peak voltage. The negative peak holding circuit is used for holding a negative peak voltage. Of course, it will be understood by those skilled in the art that the implementation of the peak obtaining circuit 220 described above is merely an example.

The apparatus according to embodiments of the present disclosure is not limited thereto, as long as the peak voltage of the voltage signal can be obtained and held.

The duration determining circuit 230 determines the duration of the surge current based on the voltage signal.

Particularly, in an embodiment, the duration determining circuit 230 determines the duration of the surge current directly from the duration of the voltage signal. That is, the duration determining circuit 230 regards the duration of the voltage signal as the duration of the surge current.

In another embodiment, considering that the duration of the surge current is usually very short, it may be difficult to directly obtain the duration of the surge current and the corresponding voltage signal, thus, the duration may be obtained by the energy and the peak voltage of the voltage signal.

More specifically, in this embodiment, the duration determining circuit 230 includes an energy obtaining circuit and a calculating circuit. The energy obtaining circuit obtains energy of the voltage signal. The calculating circuit calculates the duration of the surge current based on the peak voltage and the energy. For example, the calculating circuit may approximate a waveform of the voltage signal as a geometrie shape. Thus, based on the peak voltage indicating a first geometric parameter of the geometric shape and the energy indicating a second geometric parameter of the geometric shape, the calculating circuit may calculate the duration indicating a third geometric parameter of the geometric shape.

For example, the calculating circuit may approximate the waveform of the voltage signal as a triangle. Thus, the duration indicates a base of the triangle, the peak voltage indicates a height corresponding to the base of the triangle, and the energy indicates an area of the triangle. Therefore, the calculating circuit may calculate the duration according to the following expression (1):

$$ T = \frac{S}{0.5 \times V_{peak}} \qquad (1) $$

Wherein, $T$ is the duration of the surge current, S is the energy of the voltage signal, and $V_{peak}$ is the peak voltage of the voltage signal.

The peak current determining circuit 240 determines the peak surge current corresponding to the peak voltage based on predetermined relationship between the peak voltage and the peak surge current. The predetermined relationship between the peak voltage and the peak surge current may be obtained in advance through testing by a person skilled in the art. Thus, after the peak obtaining circuit 220 obtains the peak voltage, the peak current determining circuit 240 may determine the corresponding peak surge current based on the peak voltage and the predetermined relationship.

After the duration determining circuit 230 determines the duration of the surge current and the peak current determining circuit 240 determines the peak surge current, the lifetime parameter determining circuit 250 may determine a parameter indicating a lifetime of the surge protection device from the peak surge current and the duration, according to a lifetime curve of the surge protection device. Particularly, the lifetime curve of the surge protection device can be provided by the manufacturer of the surge protection device. The lifetime curve indicates the degree of deterioration of the surge protection device impacted by different surge currents over time. Thus, the lifetime parameter determining circuit 250 may determine the parameter based on the peak surge current and the duration.

It should be noted that, although the lifetime curve of the surge protection device is described herein as an example, the apparatus according to embodiments of the present disclosure is not limited thereto. Instead, a lifetime curve of a device (e.g., MOV (Metal Oxide Varistor)) included in the surge protection device may be used for indicating the lifetime curve of the surge protection device.

Exemplarily, the lifetime parameter determining circuit 250 may include a first processing unit, a reading unit, and a second processing unit. The first processing unit determines a first degree of deterioration of the surge protection device caused by the current surge current from the peak surge current and the duration according to the lifetime curve of the surge protection device. The reading unit reads out a second degree of deterioration of the surge protection device caused by a previous surge current. The second processing unit determines the parameter based on the first degree of deterioration and the second degree of deterioration. For example, the second processing unit adds the first degree and the second degree to determine a cumulative degree of deterioration, so as to determine the parameter indicating the lifetime of the surge protection device, such as a remaining lifetime, a degree of cumulative deterioration, etc. The parameter may be presented in various forms such as percentage, remaining time, remaining times, etc. It will be understood by those skilled in the art that the implementation of the lifetime parameter determining circuit as described above is merely an example. The apparatus according to embodiments of the present disclosure is not limited thereto, as long as the parameter indicating the lifetime of the surge protection device can be determined. For example, the lifetime parameter determining circuit may output the degree of deterioration each time as the parameter directly, and so on.

Further, the output circuit 260 outputs the parameter. In a first example, the output circuit 260 may output the parameter to the indicator associated with the surge protection device, to indicate the lifetime of the surge protection device by the indicator, in order to facilitate checking by a user at any time. In a second example, the output circuit 260 may output the parameter to a monitoring apparatus for monitoring the surge protection device, so that an engineer may centrally monitor the surge protection device. In a third example, the output circuit 260 may output the parameter to a storage apparatus to facilitate storing history working information of the surge protection device. In addition, besides outputting the parameter, the output circuit 260 may further output at least one of the peak surge current and the duration. That is, the output circuit 260 may output information related to the current lightning current impact, so as to facilitate checking by the user or monitoring by the engineer or the like.

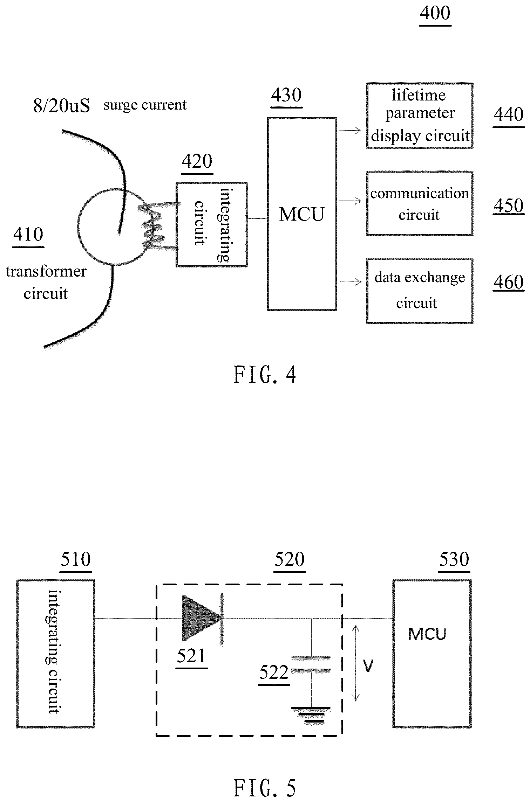

The apparatus for the surge protection device according to an embodiment of the present disclosure has been described above with reference to FIG. 2. In the following, two kinds of implementation of the apparatus for the surge protection device according to an embodiment of the present disclosure will be described with reference to FIG. 3 and FIG. 4.

FIG. 3 is a structure diagram exemplarily illustrating a hardware configuration of the apparatus for the surge protection device according to a first embodiment of the present disclosure.

As shown in FIG. 3, the apparatus 300 includes a transformer circuit 310, an integrating circuit 320, a peak obtaining circuit 330, a positive peak holding circuit 340A, a negative peak holding circuit 340B, an energy obtaining circuit 350, a Micro Controller Unit (MCU) 360, a lifetime parameter display circuit 370, a communication circuit 380, and a data exchange circuit 390.

The transformer circuit 310 is implemented by a component such as a transformer. More specifically, the transformer is implemented by a coil, e.g., Rogowski Coil and so on, which is used for receiving surge current with exemplary 8/20μs. Of course, the value and duration of the surge current is merely exemplary, and the apparatus according to embodiments of the present disclosure is not limited thereto. The transformer circuit 310 and the integrating circuit 320 may be implemented as the converting circuit 210 shown in FIG. 2.

Since the embodiment shown in FIG. 3 is more suitable for a case in which there is no high requirement for the performance of MCU (i.e., a relatively slow processing speed), the peak obtaining circuit 330, the positive peak holding circuit 340A, and the negative peak holding circuit 340B may be implemented as the peak obtaining circuit 220 shown in FIG. 2.

The energy obtaining circuit 350 and the MCU 360 can be implemented as the duration determining circuit 230 shown in FIG. 2. In addition, the MCU 360 is also implemented as the peak current determining circuit 240 and lifetime parameter determining circuit 250 shown in FIG. 2.

The lifetime parameter display circuit 370, the communication circuit 380, and the data exchange circuit 390 are implemented as the output circuit 260 shown in FIG. 2. Particularly, the lifetime parameter display circuit 370 is used for displaying the lifetime of the surge protection device to facilitate checking by a user at any time. In a second example, the communication circuit 380 is used for outputting the parameter to a monitoring apparatus for monitoring the surge protection device, so that an engineer centrally monitors the surge protection device. The communication circuit 380 may be implemented by wire communication or wireless communication. The data exchange circuit 390 is used for outputting the parameter to a storage apparatus to facilitate storing history working information of the surge protection device. The storage apparatus may be a local storage apparatus or a remote storage apparatus.

A first implementation of the apparatus for the surge protection device according to an embodiment of the present disclosure has been described above with reference to FIG. 3. In this implementation, MCU only need to processes corresponding calculating processes, therefore, there is not a relatively high requirement for the performance of the MCU, and thus, the apparatus may be implemented with a relatively lower cost.

Alternatively, if there is not high requirement for the cost, a MCU with high performance may be used for implementing the apparatus according to embodiments of the present disclosure. FIG. 4 is a structure diagram exemplarily illustrating a hardware configuration of the apparatus for the surge protection device according to a second embodiment of the present disclosure.

As shown in FIG. 4, the apparatus 400 includes a transformer circuit 410, an integrating circuit 420, a MCU 430, a lifetime parameter display circuit 440, a communication circuit 380, and a data exchange circuit 390. Different from that in FIG. 3, in the implementation shown in FIG. 4, the peak obtaining circuit 220, the duration determining circuit 230, the peak current determining circuit 240, and the lifetime parameter determining circuit 250 are all implemented by the MCU. Therefore, different from that in FIG. 3, since FIG. 4 is more suitable for a case in which the performance of MCU 430 is relatively high and the processing speed thereof is relatively fast, no peak holding circuit is arranged. Thus, compared with FIG. 3, multiple external hardware circuits arc omitted, thus, the size of the apparatus is saved, which facilitates the miniaturization of the apparatus.

FIG. 5 is a circuit diagram exemplarily illustrating an energy obtaining circuit of an apparatus for a surge protection device according to an embodiment of the present disclosure. As shown in FIG. 5, an integrating circuit 510, and energy obtaining circuit 520, and a MCU 530 correspond to the integrating circuit 320, the energy obtaining circuit 350, and the MCU 360 shown in FIG. 3, respectively. Particularly, the energy obtaining circuit 520 includes, for example, a diode 521 and a capacitor 522 connected in series. In addition, the capacitor 522 is connected to the ground. Thus, after the voltage signal passes through the diode 521 and the capacitor 522, an energy signal is obtained by obtaining a signal of the capacitor 522 relative to the ground and outputting the signal into MCU. Of course, those skilled in the art should understand that, the energy obtaining circuit as described above is merely exemplary. The apparatus according to embodiment of the present disclosure is not limited thereto, but may be implemented in various forms.

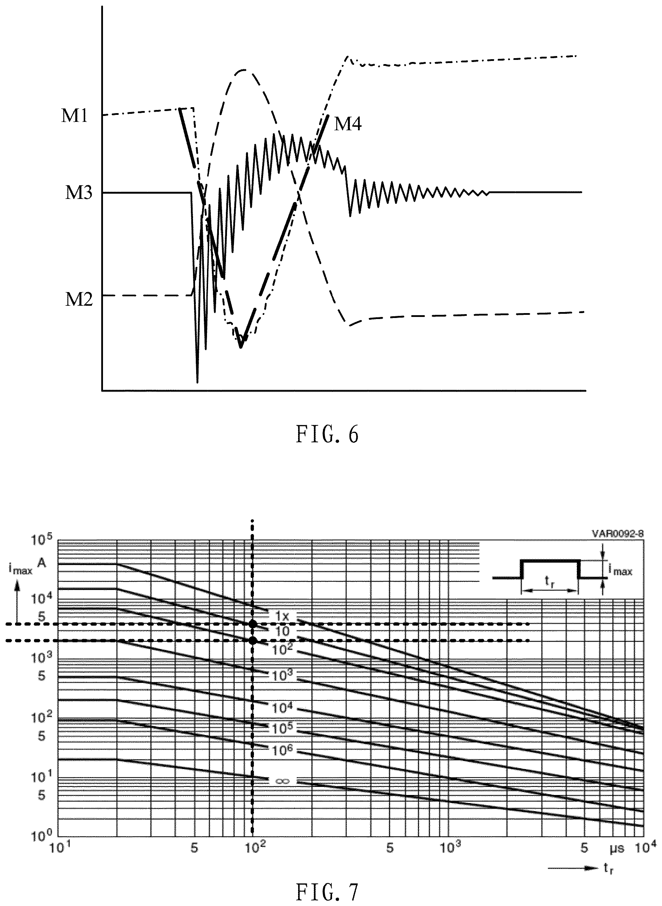

FIG. 6 is a waveform diagram exemplarily illustrating relationships among an actual surge current signal, an output signal of the transformer circuit, an output signal of the integrating circuit (i.e., a voltage signal described with reference to FIG. 2) and an approximating signal of the voltage signal.

The actual surge current signal is illustrated in a thin dashed line, i.e., M2 shown in FIG. 6. The output signal of the transformer circuit is illustrated in a solid line, i.e., M3 shown in FIG. 6. The signal corresponding to the output signal of the integrating circuit is illustrated in a dotted line, i.e., M1 shown in FG. 6. More specifically, in order to make it possible to observe the waveforms of the signals in the waveform diagram more clearly, a reverse signal of the voltage signal is shown herein. In addition, the approximating signal of the reverse signal is illustrated in a thick dashed line, i.e., M4 shown in FG. 6.

As shown in FIG. 6, the output signal of the transformer circuit is directly proportional to the differential of the actual surge current signal. In addition, the reverse signal is inversely proportional to the actual surge current signal. In other words, the output signal of the integrating circuit is directly proportional to the actual surge current signal. The waveform of the reverse signal is approximated as a triangle M4, more specifically, as the two sides of the triangle. Those skilled in the art should understand that, accordingly, the approximating signal of the output signal of the integrating circuit is also approximated as two sides of a triangle. A base of the triangle is indicated by the duration of the surge current, the height corresponding to the base of the triangle is indicated by the peak voltage, and the area of the triangle is indicated by the energy. Thus, the duration may be calculated according to the expression (1) as described above.

FIG. 7 is a diagram exemplarily illustrating a lifetime curve of the surge protection device. In FIG. 7, the horizontal axis indicates time, and the vertical axis indicates peak current of the surge current. The lifetime parameter determining circuit 250 shown in FIG. 2 may determine the parameter indicating the lifetime of the surge protection device from the peak surge current and the duration.

Particularly, for example, in the case where the peak surge current is 2 kA and the duration is 100μs, according to the lifetime curve shown in FIG. 7, the lifetime parameter determining circuit 250 may determine that the peak surge current and the duration are intersected at a line indicating 100 times in the lifetime curve. That is, the surge protection device is able to withstand the impact of the surge current with the peak surge current of 2 kA and the duration of 100 μs for 100 times. In other words, after the current surge current, the lifetime of the surge protection circuit is decreased by 1%. For another example, in the case where the peak surge current is 3.5 kA and the duration is 100 μs, according to the lifetime curve shown in FIG. 7, the lifetime parameter determining circuit 250 may determine that the peak surge current and the duration are intersected at a line indicating 10 times in the lifetime curve. In other words, after the current surge current, the lifetime of the surge protection circuit is decreased by 10%. Thus, the remaining lifetime of the surge protection circuit determined through accumulating the previously reduced lifetime by the lifetime parameter determining circuit 250 is regarded as the parameter.

The apparatus for the surge protection device according to embodiments of the present disclosure has been described with reference to FIG. 1 to FIG. 7. In the apparatus for the surge protection device according to embodiments of the present disclosure, the peak surge current and the duration of the surge current is determined based on the surge current, the lifetime parameter of the surge protection device is further determined, thus, working status of the surge protection device can be effectively indicated to remind the user about the risk of the lightning current and the effectiveness of the surge protection device, accordingly, user experience is improved, and the security of the surge protection device and the application scenarios thereof is improved as well.

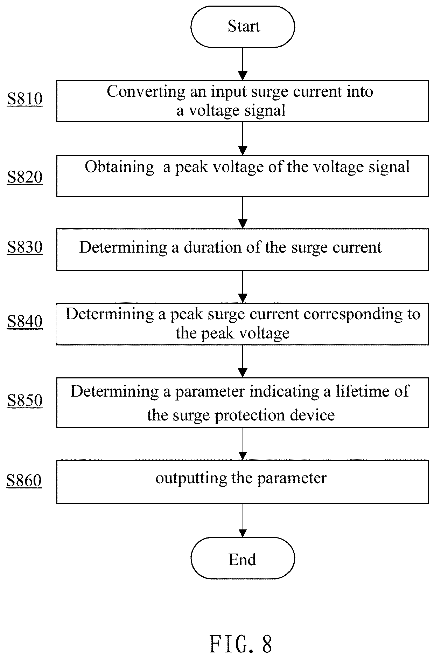

Hereinafter, a method for a surge protection device according to an embodiment of the present disclosure will be described with reference to FIG. 8.

FIG. 8 is a flowchart illustrating main steps of the method for the surge protection device according to an embodiment of the present disclosure. As shown in FIG. 8, first, in step S810, an input surge current is converted into a voltage signal which is proportional to the surge current. Then in step S820, a peak voltage of the voltage signal is obtained. In addition, in step S830, duration of the surge current is determined based on the voltage signal. In step S840, a peak surge current corresponding to the peak voltage is determined based on a predetermined relationship between the peak voltage and the peak surge current. Then, in step S850, a parameter indicating a lifetime of the surge protection device is determined from the peak surge current and the duration according to a lifetime curve of the surge protection device. Then the parameter is output in step S860.

It should be noted that, although step S810-S860 are sequentially shown in the flowchart in FIG. 8, the method for the surge protection device according to embodiments of the present disclosure does not need to be performed in the sequence shown in FIG. 8, instead, the method may be properly performed in various other sequences. For example, although step S840 is shown after step S830, steps S840 and S830 may be performed in parallel or in a reverse scqucncc.

In an embodiment, the step of determining the duration of the surge current includes: obtaining energy of the voltage signal; and calculating the duration of the surge current based on the peak voltage and the energy.

In another embodiment, the step of calculating the duration of the surge current includes: approximating a waveform of the voltage signal as a geometry, and calculating the duration indicating a third geometric parameter of the geometric shape, based on the peak voltage indicating a first geometric parameter of the geometry and the energy indicating a second geometric parameter of the geometry.

In another embodiment, the step of determining the parameter indicating the lifetime of the surge protection device includes: determining a first degree of deterioration of the surge protection device caused by the current surge current from the peak surge current and the duration according to a lifetime curve of the surge protection device; reading out a second degree of deterioration of the surge protection device caused by a previous surge current; and determining the parameter based on the first degree of deterioration and the second degree of deterioration

In another embodiment, the step of converting the input surge current into the voltage signal which is proportional to the surge current includes: converting the surge current into a differential signal; and integrating the differential signal to obtain the voltage signal.

In another embodiment, the step of outputting the parameter includes at least one of the following: outputting the parameter to an indicator associated with the surge protection device to indicate the lifetime of the surge protection device by the indicator; outputting the parameter to a monitoring apparatus which is configured to monitor the surge protection device; and outputting the parameter to a storage apparatus.

In another embodiment, the step of outputting the parameter includes outputting at least one of the peak surge current and the duration, and the parameter.

The operations of the steps of the method for the surge protection device according to embodiments of the present disclosure have been described in detail with reference to FIG. 1 to FIG. 7, and will not be repetitively described herein.

In the method for the surge protection device according to embodiments of the present disclosure, the peak surge current and the duration of the surge current is determined based on the surge current, the lifetime parameter of the surge protection device is further determined, thus, the working status of the surge protection device can be effectively indicated to remind the user about the risk of the lightning current and the effectiveness of the surge protection device, accordingly, user experience is improved, and the security of the surge protection device and the application scenarios thereof is improved as well.

The method and apparatus for the surge protection device according to embodiments of the present disclosure have been described with reference to FIG. 1 to FIG. 8.

It is to be noted that in the specification, the terms comprising, containing or any other variation are intended to cover non-exhaustively inclusion, so that a process, a method, a product or a device comprising a series of elements not only include those elements, but may also include other elements not listed explicitly, or include elements inherent to the process, the method, the product or the device. Without any other limitation, an element limited by the expression "comprising a" does not exclude there being additional identical elements included in the process, the method, the product or the device comprising the element.

Further, it is to be noted that in the specification, the expressions similar to a first... unit, a second... unit are only for distinguishing conveniently, and do not mean that they must be implemented as two or more units physically separated. In fact, the units may be implemented as one single unit integrally, or as multiple units, as necessary.

Finally, it is to be noted that the above-described series of process not only include the processes performed in a time order, but may also include processes in parallel or individually other than in the time order.

From the description of the embodiments, those skilled in the art should understand clearly that the present disclosure may be implemented by software in combination with necessary hardware platform, and of course the present disclosure may also be fully implemented by hardware. Based on such understanding, the part of the technical solution of the invention which contributes to the prior art may be embodied in whole or in part in the form of a software product. This computer software product can be stored in a storage medium, such as a ROM/RAM, a disk, an optical disc and the like, and include many instructions to cause a computer device (possibly a personal computer, a server or a network device etc.) to implement the embodiments of the invention or method described by some parts of the embodiments.

In the embodiments of the present disclosure, the module/unit may be realized by software so as to be executed by various processors. For example, an identified executable code module may comprise one or more physical or logical blocks of the computer instructions, which may, for example, be constructed as an object, a process or a function. Nevertheless, the executable codes of the identified module are not necessary to be located together physically, and may comprise different instructions stored at different locations, which may construct a module and achieve the predetermined purpose of the module when being combined together logically.

When the module is realized by software, considering the existing hardware manufacture process, those skilled in the art may implement its function by corresponding hardware circuits comprising the normal VLSI circuit or the existing semiconductor such as a logical chip or a transistor, or other discrete elements, regardless of cost. The module may also be implemented by a programmable hardware device, such as a field programmable gate array, a programmable array logic, or a programmable logical device, etc..

The present disclosure has been described above in detail. The principle and implementation of the present disclosure is described by way of example in the description. The above description of the embodiments is only for facilitating the understanding of the method and the idea of the present disclosure. It should be noted that various modifications and alternations may be made by those of ordinary skill in the art without departing from the principle of the present disclosure, based on the teaching of the present disclosure. In summary, the description shall not be construed as a limitation to the scope of the present disclosure.

**Claims**

1. An apparatus (200) for a surge protection device, comprising:

    a converting circuit (210), configured to convert an input surge current into a voltage signal which is proportional to the surge current;
    a peak obtaining circuit (220), configured to obtain a peak voltage of the voltage signal;
    a duration determining circuit (230), configured to determine a duration of the surge current based on the voltage signal;
    a peak current determining circuit (240), configured to determine a peak surge current corresponding to the peak voltage based on a predetermined relationship between the peak voltage and the peak surge current;
    a lifetime parameter determining circuit (250), configured to determine a lifetime-related parameter of the surge protection device from the peak surge current and the duration, according to a lifetime curve of the surge protection device; and
    an output circuit (260), configured to output the parameter,
    **characterized in that**
    the lifetime parameter determining circuit (250) is adapted to determine the lifetime-related parameter to comprise at least one of remaining lifetime and degree of cumulative deterioration, and
    the duration determining circuit (230) comprises:

    an energy obtaining circuit, configured to obtain an energy of the voltage signal; and
    a calculating circuit, configured to calculate the duration of the surge current based on the peak voltage and the energy.

2. The apparatus according to claim 1, wherein the calculating circuit is configured to approximate a waveform of the voltage signal as a geometric shape, and calculating the duration indicating a third geometric parameter of the geometric shape based on the peak voltage indicating a first geometric parameter of the geometric shape and the energy indicating a second geometric parameter of the geometric shape.

3. The apparatus according to claim 2, wherein the geometric shape comprises a triangle, the duration indicates a base of the triangle, the peak voltage indicates a height corresponding to the base of the triangle, and the energy indicates an area of the triangle.

4. The apparatus according to claim 1, wherein the peak obtaining circuit further hold the peak voltage of the voltage signal, and the calculating circuit is implemented by Micro Controller Unit.

5. The apparatus according to claim 1, wherein the peak obtaining circuit, the duration determining circuit, the peak current determining circuit, and the lifetime parameter determining circuit are implemented by Micro Controller Unit.

6. The apparatus according to claim 1, wherein the lifetime parameter determining circuit comprises:

    a first processing unit, configured to determine a first degree of deterioration of the surge protection device caused by the current surge current from the peak surge current and the duration, according to a lifetime curve of the surge protection device;
    a reading unit, configured to read out a second degree of deterioration of the surge protection device caused by a previous surge current; and
    a second processing unit, configured to determine the parameter based on the first degree of deterioration and the second degree of deterioration.

7. The apparatus according to claim 1, wherein the converting circuit comprise:

    a transformer circuit, configured to convert the surge current into a differential signal; and
    an integrating circuit, configured to integrate the differential signal to obtain the voltage signal.

8. The apparatus according to claim 1, wherein the output circuit is configured to implement at least one of:

    outputting the parameter to an indicator associated with the surge protection device to indicate the lifetime of the surge protection device by the indicator;
    outputting the parameter to a monitoring apparatus which is configured to monitor the surge protection device; and
outputting the parameter to a storage apparatus.

9. The apparatus according to claim 1, wherein the output circuit is configured to output at least one of the peak surge current and the duration, and the parameter.

10. A method for monitoring a surge protection device, comprising converting (S810) an input surge current into a voltage signal which is proportional to the surge current;
obtaining (S820) a peak voltage of the voltage signal;
determining (S830) a duration of the surge current based on the voltage signal; determining (S840) a peak surge current corresponding to the peak voltage based on a predetermined relationship between the peak voltage and the peak surge current;
determining (S850) a lifetime-related parameter of the surge protection device from the peak surge current and the duration, according to a lifetime curve of the surge protection device; and
outputting (S860) the parameter,
**characterized in that**
the lifetime-related parameter is determined to indicate at least one of remaining lifetime and degree of cumulative deterioration of the surge protection device, and
the step of determining (S830) the duration of the surge current comprises:

obtaining an energy of the voltage signal; and
calculating the duration of the surge current based on the peak voltage and the energy.

11. The method according to claim 10, wherein the step of calculating the duration of the surge current comprises:

approximating a waveform of the voltage signal as a geometric shape; and
calculating the duration indicating a third geometric parameter of the geometric shape based on the peak voltage indicating a first geometric parameter of the geometric shape and the energy indicating a second geometric parameter of the geometric shape.

12. The method according to claim 10, wherein the step of determining the parameter indicating the lifetime of the surge protection device comprises:

determining a first degree of deterioration of the surge protection device caused by the current surge current from the peak surge current and the duration, according to a lifetime curve of the surge protection device;

reading out a second degree of deterioration of the surge protection device caused by a previous surge current; and
determining the parameter based on the first degree of deterioration and the second degree of deterioration.

13. The method according to claim 10, wherein the step of converting the input surge current into the voltage signal which is proportional to the surge current comprises:

converting the surge current into a differential signal; and
integrating the differential signal to obtain the voltage signal.

14. The method according to claim 10, wherein the step of outputting the parameter comprises at least one of:

outputting the parameter to an indicator associated with the surge protection device to indicate the lifetime of the surge protection device by the indicator;
outputting the parameter to a monitoring apparatus which is configured to monitor the surge protection device; and
outputting the parameter to a storage apparatus.

15. The method according to claim 10, wherein the step of outputting the parameter comprises:
outputting at least one of the peak surge current and the duration, and the parameter.

**Patentansprüche**

1. Vorrichtung (200) für eine Spannungsstoß-Schutzeinrichtung, die umfasst:

eine Umwandlungsschaltung (210), die so konfiguriert ist, dass sie einen Eingangsstoßstrom in ein Spannungssignal umwandelt, das proportional zu dem Stoßstrom ist;
eine Spitzenwert-Erfassungsschaltung (220), die so konfiguriert ist, dass sie eine Spitzenspannung des Spannungssignals erfasst;
eine Schaltung (230) zur Bestimmung der Dauer, die so konfiguriert ist, dass sie eine Dauer des Stoßstroms auf der Grundlage des Spannungssignals bestimmt;
eine Spitzenstrom-Bestimmungsschaltung (240), die so konfiguriert ist, dass sie einen Spitzenstoßstrom, der der Spitzenspannung entspricht, auf der Grundlage einer vorbestimmten Beziehung zwischen der Spitzenspannung und dem Spitzenstoßstrom bestimmt;

eine Lebensdauerparameter-Bestimmungsschaltung (250), die so konfiguriert ist, dass sie einen lebensdauerbezogenen Parameter der Spannungsstoß-Schutzeinrichtung aus dem Spitzenstoßstrom und der Dauer gemäß einer Lebensdauer-Kurve der Spannungsstoß-Schutzeinrichtung bestimmt; und
eine Ausgabeschaltung (260), die zur Ausgabe des Parameters konfiguriert ist,
**dadurch gekennzeichnet, dass**
die Lebensdauerparameter-Bestimmungsschaltung (250) so ausgelegt ist, dass sie den lebensdauerbezogenen Parameter so bestimmt, dass er eine Restlebensdauer und/oder einen Grad der kumulativen Verschlechterung umfasst, und
die Schaltung (230) zur Bestimmung der Dauer umfasst:
eine Energiebeschaffungsschaltung, die so konfiguriert ist, dass sie eine Energie des Spannungssignals beschafft; und
eine Berechnungsschaltung, die so konfiguriert ist, dass sie die Dauer des Stoßstroms basierend auf der Spitzenspannung und der Energie berechnet.

2. Vorrichtung nach Anspruch 1, wobei die Berechnungsschaltung so konfiguriert ist, dass sie eine Wellenform des Spannungssignals als geometrische Form annähert und die Dauer, die einen dritten geometrischen Parameter der geometrischen Form angibt, auf der Grundlage der Spitzenspannung, die einen ersten geometrischen Parameter der geometrischen Form angibt, und der Energie, die einen zweiten geometrischen Parameter der geometrischen Form angibt, berechnet.

3. Vorrichtung nach Anspruch 2, wobei die geometrische Form ein Dreieck umfasst, die Dauer eine Basis des Dreiecks angibt, die Spitzenspannung eine Höhe mit Bezug auf die Basis des Dreiecks angibt, und die Energie eine Fläche des Dreiecks angibt.

4. Vorrichtung nach Anspruch 1, wobei die Spitzenwert-Erfassungsschaltung ferner die Spitzenspannung des Spannungssignals hält und die Berechnungsschaltung durch eine Mikrocontrollereinheit implementiert ist.

5. Vorrichtung nach Anspruch 1, wobei die Spitzenwert-Erfassungsschaltung, die Schaltung zur Bestimmung der Dauer, die Spitzenstrom-Bestimmungsschaltung und die Lebensdauerparameter-Bestimmungsschaltung durch eine Mikrocontrollereinheit implementiert sind.

6. Vorrichtung nach Anspruch 1, wobei die Lebensdauerparameter-Bestimmungsschaltung umfasst:

eine erste Verarbeitungseinheit, die so konfiguriert ist, dass sie einen ersten Grad der Verschlechterung der Spannungsstoß-Schutzeinrichtung, der durch den aktuellen Stoßstrom verursacht wird, aus dem Spitzenstoßstrom und der Dauer gemäß einer Lebensdauerkurve der Spannungsstoß-Schutzeinrichtung bestimmt;
eine Ausleseeinheit, die so konfiguriert ist, dass sie einen zweiten Grad der Verschlechterung der Spannungsstoß-Schutzeinrichtung ausliest, der durch einen vorhergehenden Stoßstrom verursacht wurde; und
eine zweite Verarbeitungseinheit, die so konfiguriert ist, dass sie den Parameter basierend auf dem ersten Grad der Verschlechterung und dem zweiten Grad der Verschlechterung bestimmt.

7. Vorrichtung nach Anspruch 1, wobei die Umwandlungsschaltung umfasst:

eine Transformatorschaltung, die so konfiguriert ist, dass sie den Stoßstrom in ein Differenzsignal umwandelt; und
eine integrierende Schaltung, die so konfiguriert ist, dass sie das Differenzsignal integriert, um das Spannungssignal zu erhalten.

8. Vorrichtung nach Anspruch 1, wobei die Ausgabeschaltung so konfiguriert ist, dass sie mindestens eine der folgenden Funktionen implementiert:

Ausgeben des Parameters an eine der Spannungsstoß-Schutzeinrichtung zugeordnete Anzeige, um die Lebensdauer der Spannungsstoß-Schutzeinrichtung durch die Anzeige anzuzeigen;
Ausgeben des Parameters an eine Überwachungseinrichtung, die zur Überwachung der Spannungsstoß-Schutzeinrichtung konfiguriert ist; und
Ausgeben des Parameters an eine Speichereinrichtung.

9. Vorrichtung nach Anspruch 1, wobei die Ausgabeschaltung so konfiguriert ist, dass sie den Spitzenstoßstrom und/oder die Dauer sowie den Parameter ausgibt.

10. Verfahren zur Überwachung einer Spannungsstoß-Schutzeinrichtung, umfassend:

Umwandeln (S810) eines Eingangsstoßstroms in ein Spannungssignal, das proportional zu dem Stoßstrom ist;
Erfassen (S820) einer Spitzenspannung des Spannungssignals;
Bestimmen (S830) einer Dauer des Stoßstroms basierend auf dem Spannungssignal;
Bestimmen (S840) eines Spitzenstoßstroms, der der Spitzenspannung entspricht, basierend auf einer vorbestimmten Beziehung zwischen der Spitzenspannung und dem Spitzenstoßstrom;
Bestimmen (S850) eines lebensdauerbezogenen Parameters der Spannungsstoß-Schutzeinrichtung aus dem Spitzenstoßstrom und der Dauer gemäß einer Lebensdauer-Kurve der Spannungsstoß-Schutzeinrichtung; und
Ausgeben (S860) des Parameters,
**dadurch gekennzeichnet, dass**
der lebensdauerbezogene Parameter so bestimmt wird, dass er eine Restlebensdauer und/oder einen Grad der kumulativen Verschlechterung der Spannungsstoß-Schutzeinrichtung anzeigt, und
der Schritt des Bestimmens (S830) der Dauer des Stoßstroms umfasst:

Beschaffen einer Energie des Spannungssignals; und
Berechnen der Dauer des Stoßstroms auf Basis der Spitzenspannung und der Energie.

11. Verfahren nach Anspruch 10, wobei der Schritt des Berechnens der Dauer des Stoßstroms umfasst:

Annähern an eine Wellenform des Spannungssignals als geometrische Form; und
Berechnen der Dauer, die einen dritten geometrischen Parameter der geometrischen Form angibt, basierend auf der Spitzenspannung, die einen ersten geometrischen Parameter der geometrischen Form angibt, und der Energie, die einen zweiten geometrischen Parameter der geometrischen Form angibt.

12. Verfahren nach Anspruch 10, wobei der Schritt des Bestimmens des Parameters, der die Lebensdauer der Spannungsstoß-Schutzeinrichtung anzeigt, umfasst:

Bestimmen eines ersten Grades der Verschlechterung der Spannungsstoß-Schutzeinrichtung, der durch den aktuellen Stoßstrom verursacht wird, aus dem Spitzenstoßstrom und der Dauer, entsprechend einer Lebensdauerkurve der Spannungsstoß-Schutzeinrichtung;
Auslesen eines zweiten Grades der Verschlechterung der Spannungsstoß-Schutzeinrichtung, der durch einen vorhergehenden Stoßstrom verursacht wurde; und
Bestimmen des Parameters basierend auf dem ersten Grad der Verschlechterung und dem zweiten Grad der Verschlechterung.

13. Verfahren nach Anspruch 10, wobei der Schritt des Umwandelns des Eingangsstoßstroms in das Spannungssignal, das proportional zu dem Stoßstrom ist, umfasst:

Umwandeln des Stoßstroms in ein Differenzsignal; und
Integrieren des Differenzsignals, um das Spannungssignal zu erhalten.

14. Verfahren nach Anspruch 10, wobei der Schritt des Ausgebens des Parameters mindestens eines von Folgendem umfasst:

Ausgeben des Parameters an eine der Spannungsstoß-Schutzeinrichtung zugeordnete Anzeige, um die Lebensdauer der Spannungsstoß-Schutzeinrichtung durch die Anzeige anzuzeigen;
Ausgeben des Parameters an eine Überwachungsvorrichtung, die zur Überwachung der Spannungsstoß-Schutzeinrichtung konfiguriert ist; und
Ausgeben des Parameters an eine Speichervorrichtung.

15. Verfahren nach Anspruch 10, wobei der Schritt des Ausgebens des Parameters umfasst:
Ausgeben des Spitzenstoßstroms und/oder der Dauer sowie des Parameters.

**Revendications**

1. Appareil (200) pour un dispositif de protection contre les surtensions, comprenant :

un circuit de conversion (210), configuré pour convertir un courant de surtension d'entrée en un signal de tension qui est proportionnel au courant de surtension ;
un circuit d'obtention de crête (220), configuré pour obtenir une tension de crête du signal de tension ;
un circuit de détermination de durée (230), configuré pour déterminer une durée du courant de surtension sur la base du signal de tension ;
un circuit de détermination de courant de crête (240), configuré pour déterminer un courant de surtension de crête correspondant à la tension de crête sur la base d'une relation prédéterminée entre la tension de crête et le courant de surtension de crête ;
un circuit de détermination de paramètre de durée de vie (250), configuré pour déterminer un paramètre lié à la durée de vie du dispositif de protection contre les surtensions à partir du courant de surtension de crête et de la durée, selon une courbe de durée de vie du dispositif de protection contre les surtensions ; et

un circuit de sortie (260), configuré pour délivrer le paramètre,

**caractérisé en ce que**

le circuit de détermination de paramètre de durée de vie (250) est adapté à déterminer le paramètre lié à la durée de vie afin qu'il comprenne au moins un paramètre parmi la durée de vie restante et le degré de détérioration cumulative, et

le circuit de détermination de durée (230) comprend :

un circuit d'obtention d'énergie, configuré pour obtenir une énergie du signal de tension ; et

un circuit de calcul, configuré pour calculer la durée du courant de surtension sur la base de la tension de crête et de l'énergie.

2. Appareil selon la revendication 1, dans lequel le circuit de calcul est configuré pour approximer une forme d'onde du signal de tension par une forme géométrique et calculer la durée indiquant un troisième paramètre géométrique de la forme géométrique sur la base de la tension de crête indiquant un premier paramètre géométrique de la forme géométrique et de l'énergie indiquant un deuxième paramètre géométrique de la forme géométrique.

3. Appareil selon la revendication 2, dans lequel la forme géométrique comprend un triangle, la durée indique une base du triangle, la tension de crête indique une hauteur correspondant à la base du triangle et l'énergie indique une surface du triangle.

4. Appareil selon la revendication 1, dans lequel le circuit d'obtention de crête maintient en outre la tension de crête du signal de tension et le circuit de calcul est mis en œuvre par un microcontrôleur.

5. Appareil selon la revendication 1, dans lequel le circuit d'obtention de crête, le circuit de détermination de durée, le circuit de détermination de courant de crête et le circuit de détermination de paramètre de durée de vie sont mis en œuvre par le microcontrôleur.

6. Appareil selon la revendication 1, dans lequel le circuit de détermination de paramètre de durée de vie comprend :

une première unité de traitement, configurée pour déterminer un premier degré de détérioration du dispositif de protection contre les surtensions causé par le courant de surtension actuel à partir du courant de surtension de crête et de la durée, selon une courbe de durée de vie du dispositif de protection contre les surtensions ;

une unité de lecture, configurée pour lire un deuxième degré de détérioration du dispositif de protection contre les surtensions causé par un courant de surtension précédent ; et

une deuxième unité de traitement, configurée pour déterminer le paramètre sur la base du premier degré de détérioration et du deuxième degré de détérioration.

7. Appareil selon la revendication 1, dans lequel le circuit de conversion comprend :

un circuit transformateur, configuré pour convertir le courant de surtension en un signal différentiel ; et

un circuit intégrateur, configuré pour intégrer le signal différentiel pour obtenir le signal de tension.

8. Appareil selon la revendication 1, dans lequel le circuit de sortie est configuré pour mettre en œuvre au moins l'une des actions suivantes :

délivrer le paramètre à un indicateur associé au dispositif de protection contre les surtensions pour indiquer la durée de vie du dispositif de protection contre les surtensions par l'indicateur ;

délivrer le paramètre à un appareil de surveillance qui est configuré pour surveiller le dispositif de protection contre les surtensions ; et

délivrer le paramètre à un appareil de stockage.

9. Appareil selon la revendication 1, dans lequel le circuit de sortie est configuré pour délivrer au moins l'un du courant de surtension de crête et de la durée, et le paramètre.

10. Procédé pour surveiller un dispositif de protection contre les surtensions, comprenant les étapes consistant à :

convertir (S810) un courant de surtension d'entrée en un signal de tension qui est proportionnel au courant de surtension ;

obtenir (S820) une tension de crête du signal de tension ;

déterminer (S830) une durée du courant de surtension sur la base du signal de tension ;

déterminer (S840) un courant de surtension de crête correspondant à la tension de crête sur la base d'une relation prédéterminée entre la tension de crête et le courant de surtension de crête ;

déterminer (S850) un paramètre lié à la durée de vie du dispositif de protection contre les surtensions à partir du courant de surtension de crête et de la durée, selon une courbe de durée de vie du dispositif de protection contre les surtensions ; et

délivrer (S860) le paramètre, **caractérisé en ce que**

le paramètre lié à la durée de vie est déterminé pour indiquer au moins un paramètre parmi la durée de vie restante et le degré de détérioration cumulative du dispositif de protection contre les surtensions, et

l'étape consistant à déterminer (S830) la durée du courant de surtension comprend les étapes consistant à :

obtenir une énergie du signal de tension ; et calculer la durée du courant de surtension sur la base de la tension de crête et de l'énergie.

11. Procédé selon la revendication 10, dans lequel l'étape consistant à calculer la durée du courant de surtension comprend les étapes consistant à :

approximer une forme d'onde du signal de tension par une forme géométrique ; et calculer la durée indiquant un troisième paramètre géométrique de la forme géométrique sur la base de la tension de crête indiquant un premier paramètre géométrique de la forme géométrique et de l'énergie indiquant un deuxième paramètre géométrique de la forme géométrique.

12. Procédé selon la revendication 10, dans lequel l'étape consistant à déterminer le paramètre indiquant la durée de vie du dispositif de protection contre les surtensions comprend les étapes consistant à :

déterminer un premier degré de détérioration du dispositif de protection contre les surtensions causé par le courant de surtension actuel à partir du courant de surtension de crête et de la durée, selon une courbe de durée de vie du dispositif de protection contre les surtensions ; lire un deuxième degré de détérioration du dispositif de protection contre les surtensions causé par un courant de surtension précédent ; et déterminer le paramètre sur la base du premier degré de détérioration et du deuxième degré de détérioration.

13. Procédé selon la revendication 10, dans lequel l'étape consistant à convertir le courant de surtension d'entrée en un signal de tension qui est proportionnel au courant de surtension comprend les étapes consistant à :

convertir le courant de surtension en un signal différentiel ; et intégrer le signal différentiel pour obtenir le signal de tension.

14. Procédé selon la revendication 10, dans lequel l'étape consistant à délivrer le paramètre comprend au moins l'une des étapes consistant à :

délivrer le paramètre à un indicateur associé au dispositif de protection contre les surtensions pour indiquer la durée de vie du dispositif de protection contre les surtensions par l'indicateur ;
délivrer le paramètre à un appareil de surveillance qui est configuré pour surveiller le dispositif de protection contre les surtensions ; et délivrer le paramètre à un appareil de stockage.

15. Procédé selon la revendication 10, dans lequel l'étape consistant à délivrer le paramètre consiste à : délivrer au moins l'un du courant de surtension de crête et de la durée, et le paramètre.

FIG. 1A

FIG. 1B

200

| 210 | 220 | 240 | 250 | 260 |

peak obtaining circuit

peak current determining circuit

converting circuit

230

duration determining circuit

lifetime parameter determining circuit

output circuit

FIG. 2

300

8/20uS surge current

340A

330

positive peak holding circuit

360

V+

lifetime parameter display circuit

370

320

peak obtaining circuit

V-

MCU

310

integrating circuit

negative peak holding circuit

340B

communication circuit

380

transformer circuit

S

energy obtaining circuit

350

data exchange circuit

390

FIG. 3

400

8/20uS surge current

430

lifetime
parameter
display circuit

440

420

integrating
circuit

MCU

communication
circuit

450

410

transformer
circuit

data exchange
circuit

460

FIG. 4

510

integrating circuit

520

521

522

V

530

MCU

FIG. 5

FIG. 6

FIG. 7

```
                        ┌─────────┐
                        │  Start  │
                        └─────────┘
                             │
                             ▼
        ┌──────────────────────────────────────────┐
  S810  │      Converting an input surge current into │
        │              a voltage signal              │
        └──────────────────────────────────────────┘
                             │
                             ▼
        ┌──────────────────────────────────────────┐
  S820  │   Obtaining  a peak voltage of the voltage signal │
        └──────────────────────────────────────────┘
                             │
                             ▼
        ┌──────────────────────────────────────────┐
  S830  │   Determining a duration of the surge current │
        └──────────────────────────────────────────┘
                             │
                             ▼
        ┌──────────────────────────────────────────┐
  S840  │ Determining a peak surge current corresponding to │
        │              the peak voltage              │
        └──────────────────────────────────────────┘
                             │
                             ▼
        ┌──────────────────────────────────────────┐
  S850  │ Determining a parameter indicating a lifetime of │
        │        the surge protection device         │
        └──────────────────────────────────────────┘
                             │
                             ▼
        ┌──────────────────────────────────────────┐
  S860  │           outputting the parameter          │
        └──────────────────────────────────────────┘
                             │
                             ▼
                        ┌─────────┐
                        │   End   │
                        └─────────┘
```

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070188962 A1